# EUROPÄISCHE PATENTSCHRIFT

(11) **EP 1 231 997 B1**
(45) Veröffentlichungstag und Bekanntmachung des Hinweises auf die Patenterteilung: **16.06.2004**
(21) Anmeldenummer: 00960310.1
(22) Anmeldetag: 22.07.2000
(51) Int. Cl.: B01D 29/21, B01D 35/153, B01D 35/16

(54) **RINGFILTERELEMENT MIT EINEM VERSCHLUSSSTOPFEN FÜR INSBESONDERE EIN SCHMIERÖLFILTER EINES VERBRENNUNGSMOTORS**
RING FILTER ELEMENT COMPRISING A PLUG FOR, IN PARTICULAR, A LUBRICATING OIL FILTER OF AN INTERNAL COMBUSTION ENGINE
ELEMENT DE FILTRE ANNULAIRE A BOUCHON DE FERMETURE, EN PARTICULIER POUR FILTRE A HUILE D'UN MOTEUR A COMBUSTION INTERNE

(30) Priorität: 20.11.1999 DE 19955864
(43) Veröffentlichungstag der Anmeldung: 21.08.2002
(73) Patentinhaber: MAHLE Filtersysteme GmbH, 70376 Stuttgart (DE)
(72) Erfinder: GEBERT, Hans, D-74080 Heilbronn (DE)
(74) Vertreter: Pfusch, Volker, Dipl.-Ing.
(86) Internationale Anmeldenummer: PCT/DE2000/002412
(87) Internationale Veröffentlichungsnummer: WO 2001/037967

(56) Entgegenhaltungen:
- EP-A- 0 839 563

## Beschreibung

Die Erfindung betrifft ein Ringfilterelement nach dem Oberbegriff des Patentanspruchs 1.

Ein solches Filter ist beispielsweise bekannt aus DE 39 03 675 C2.

Bei gattungsgemäßen Ringfilterelementen gibt es Einsatzfälle, in denen der Verschlußstopfen bei in ein Filtergehäuse eingesetztem Zustand des Ringfilterelementes aus dem axialen Ende des Ringfilterelementes ragen muß. In diesem Fällen ist für eine Verpackung eines noch nicht in ein Filtergehäuse eingesetzten Ringfilterelementes ein um das Herausragen des Verschlußstopfens vergrößertes Verpackungsvolumen im Vergleich zu einem solchen Ringfilterelement erforderlich bei dem kein Verschlußstopfen über eines der axialen Enden des Ringfilters hinausragt.

Die Erfindung beschäftigt sich bei einem gattungsgemäßen Ringfilterelement mit dem Problem, den Verpackungsraum für ein Ringfilterelement, bei dem bei einem im Filtergehäuse eingesetzten Zustand der Verschlußstopfen axial aus dem Ringfilterelement herausragen muß, auf einem solchen Maß zu halten, wie es bei einem Ringfilterelement ohne herausragenden Verschlußstopfen möglich wäre.

Gelöst wird dieses Problem durch eine Ausbildung des Ringfilterelementes nach den kennzeichnenden Merkmalen des Anspruchs 1.

Zweckmäßige Ausgestaltungen der Erfindung enthalten die Unteransprüche 2 bis 7.

Die Ansprüche 8 und 9 zeigen die Merkmale eines dem erfindungsgemäßen Ringfilterelement zugeordneten Filtergehäuses auf.

Insgesamt beruht die erfindungsgemäße Ausführung des Ringfilterelementes auf dem Gedanken, den Verschlußstopfen in jenem Element derart verschiebbar zu lagern, daß er bei noch nicht im Filtergehäuse eingesetztem Ringfilterelement vollständig zwischen dessen axialen Enden einschiebbar ist, während er bei in ein Filtergehäuse eingesetztem Zustand des Ringfilterelementes von dem geschlossenen Deckel des Filtergehäuses automatisch in eine Verschlußstellung geschoben wird, in der er axial aus dem Ringfilterelement herausragt. Damit der Verschlußstopfen nicht aus einem noch nicht in einem Filtergehäuse eingesetzten Ringfilterelement herausfallen kann, ist der Verschiebeweg durch an dem Verschlußstopfen angebrachte Anschläge begrenzt. Einer dieser beiden Anschläge kann von einer aufgezogenen Ringdichtung gebildet sein, die bei dem Verschlußstopfen als Verschlußelement in der in dem Filtergehäusetopf zu dichtenden Öffnung dient. Auf diese Weise ist der Verschlußstopfen einfach montierbar, indem der Dichtring erst nach dem Einschieben des Verschlußstopfens in dessen von dem Ringelement ausgehenden Lager als Verschiebewegbegrenzungsanschlag aufgezogen wird.

Ein vorteilhaftes Ausführungsbeispiel der Erfindung ist in der Zeichnung dargestellt.

Es zeigen
- Fig. 1: einen Schnitt durch ein noch nicht in ein Filtergehäuse eingesetztes Ringfilterelement,
- Fig. 2: das Ringfilterelement in einem in ein angedeutetes Filtergehäuse eingesetzten Zustand.

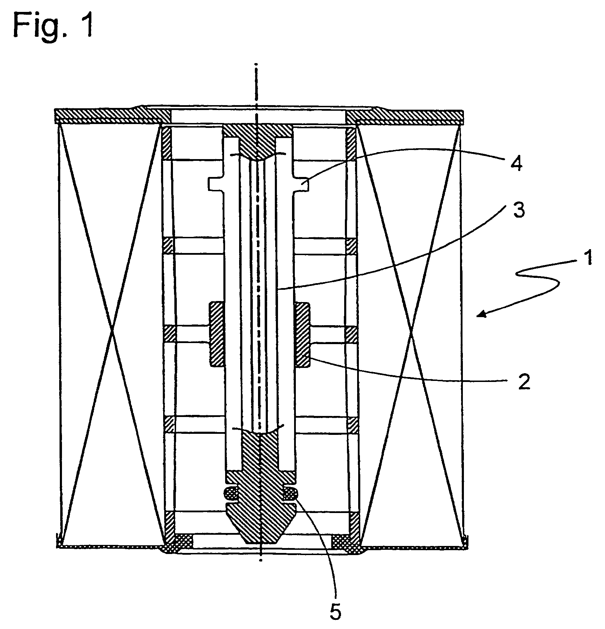

### Beschreibung der Figur 1

In einem Ringfilterelement 1 ist in einem Lager-Ring 2 ein Verschlußstopfen 3 achsgleich zu dem Ringfilterelement 1 verschiebbar gelagert. Der Verschiebeweg ist begrenzt durch einenends feste Anschläge 4 und anderenends durch einen Dichtungsring 5.

Der Dichtungsring 5 dient als dichtendes Verschlußelement in demjenigen Bereich des Verschlußstopfens 3, in dem dieser in eine in einem Filtergehäusetopf zu dichtenden Öffnung eingreift. Der Verschlußstopfen 3 befindet sich axial vollständig innerhalb des Ringfilterelementes 1.

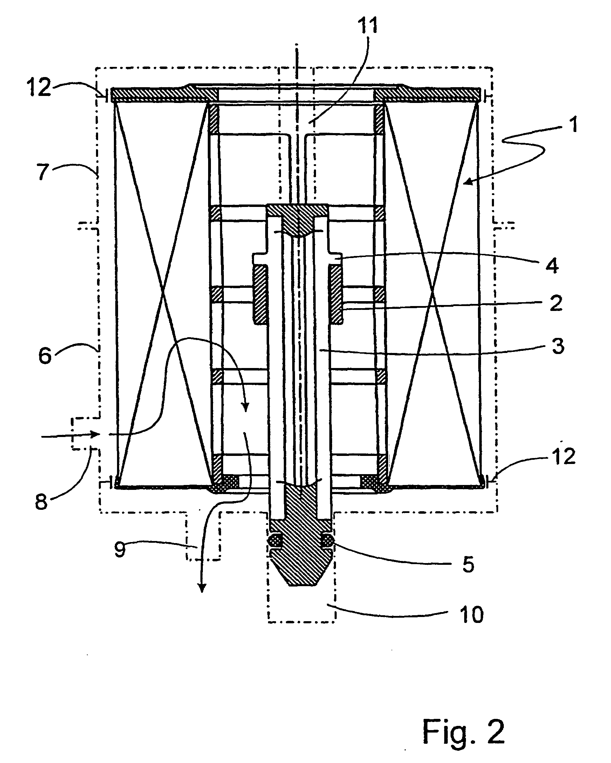

### Beschreibung der Figur 2

Hier befindet sich der Verschlußstopfen 3 in derjenigen Position, die er einnimmt, wenn das Ringfilterelement 1 in ein Filtergehäuse eingesetzt ist, das aus einem Filtergehäusetopf 6 mit dicht aufgesetztem Filterdeckel 7 besteht. Das zu filternde Medium tritt durch eine Zulauföffnung 8 in den Filtergehäusetopf 6 ein, durchströmt das Ringfilterelement 1 in der durch Pfeile angedeuteten Richtung und verläßt das Filtertopfgehäuse 6 anschließend durch die Ablauföffnung 9. Das Ringfilterelement 1 ist gegenüber dem Filtergehäuse zur Ausbildung voneinander getrennter Rein- und Rohräume durch Dichtungen 12 gedichtet. Der Verschlußstopfen 3 dichtet mit seinem Verschlußbereich, der axial aus dem Ringfilterelement 1 herausragt und den Dichtungsring 5 als Verschlußelement trägt, eine zusätzlich in dem Filtertopfgehäuse 6 vorgesehene Entleerungsöffnung 10.

In die Verschlußstellung ist der Verschlußstopfen 3 geschoben worden durch ein in dem Filterdeckel 1 vorgesehenes Anschlagelement 11, das den Verschlußstopfen 3 bei geschlossenem Filtergehäuse in der Verschlußstellung arretiert hält.

Bei geöffnetem Filterdeckel ist keine Arretierung des Verschlußstopfens 3 mehr gegeben, so daß dieser wieder frei beweglich ist und bei einem Herausnehmen des Ringfilterelementes 1 aus dem Filtergehäusetopf aus der Entleerungsöffnung 10 herausziehbar ist.

Der Verschlußstopfen 3 kann mit dem Filterdeckel 7 durch einen Rast- oder Schnappverschluß verbunden sein. Die Lösekraft innerhalb des Rast- bzw. Schnappverschlusses kann größer sein als die Kraft, die notwendig ist, den Verschlußstopfen 3 über den Dichtring 5 durch den Lager-Ring 2 hindurchzuziehen. Bei einer solchen Auslegung des Rast- bzw. Schnappverschlusses könnte der Verschlußstopfen 3 an dem Deckel 7 bei abgezogenem Ringfilterelement 1 verbleiben.

Das Ringfilterelement 1 ist üblicherweise spätestens bei einem geschlossenen Filtergehäuse mit dem Filterdeckel 7 lösbar verbunden. Die Lösekraft ist dabei derart ausgelegt, daß bei einem Öffnen des Filterdeckels 7, das heißt Abnehmen von dem Filtertopf, eine automatische Mitnahme des Ringfilterelementes 1 erfolgt, das dann bei vollständig abgenommenem Filterdeckel 7 von diesem abgetrennt werden kann. In einem solchen Fall sind die Anschläge 4 bei einem erfindungsgemäßen Ringfilterelement 1 derart an dem Verschlußstopfen 3 anzubringen, daß sie bei geschlossenem Filtergehäuse dem Lagerring 2 äußerst nahe zugeordnet sind. Nur dann ist gewährleistet, daß der Verschlußstopfen 3 gleichzeitig mit dem von dem Deckel 7 erfolgenden Herausziehen des Filterelementes 12 auch der Verschlußstopfen 3 mit seinem Verschlußteil aus der in dem Filtergehäusetopf 6 zu verschließenden Öffnung 10 herausgezogen wird. Ein solches gleichzeitiges Herausziehen des verschlußstopfens 3 zusammen mit dem Ringfilterelement 1 ist in Fällen wichtig, in denen die von dem Verschlußstopfen 3 zu verschließende Öffnung bereits vor einem vollständigen Öffnen des Filterdeckels 7 geöffnet sein soll.

## Patentansprüche

1. Ringfilterelement mit einem Verschlußstopfen, für insbesondere ein Schmierölfilter eines Verbrennungsmotors, zum Einsetzen in ein Filtergehäuse mit einem Filtergehäusetopf und einem axial abnehmbaren Filterdeckel, bei dem der Verschlußstopfen bei in dem geschlossenen Filtergehäuse eingesetztem Zustand eine in dem Filtergehäusetopf vorhandene, achsgleich zu dem Verschlußstopfen verlaufende Öffnung verschließt,
**gekennzeichnet durch** die Merkmale
- der Verschlußstopfen (3) ist an dem Ringfilterelement (1) achsgleich oder -parallel verschiebbar gelagert,
- die Lagerung ermöglicht ein Verschieben des Verschlußstopfens (3) **durch** ein an diesem von außerhalb des Ringfilterelementes (1) kontaktierend angreifendes Betätigungsmittel (11).

2. Ringfilterelement nach Anspruch 1,
**dadurch gekennzeichnet,**
**daß** bei nicht in ein Filtergehäuse eingesetztem Zustand der Verschlußstopfen (3) vollständig in einen zwischen den axialen Enden des Ringfilterelementes (1) liegenden Raum schiebbar ist.

3. Ringfilterelement nach Anspruch 1 oder 2,
**dadurch gekennzeichnet,**
**daß** der Verschlußstopfen (3) im Zentrum des Ringfilterelementes (1) lagert.

4. Ringfilterelement nach einem der vorhergehenden Ansprüche,
**dadurch gekennzeichnet,**
**daß** der Verschiebeweg des Verschlußstopfens (3) beidseitig begrenzt ist.

5. Ringfilterelement nach einem der vorhergehenden Ansprüche,
**dadurch gekennzeichnet,**
**daß** der Verschlußstopfen (3) bolzenförmig ausgebildet ist mit
- einem in einem Lager-Ring (2) des Ringfilterelementes (1) verschiebbar gelagerten Mittelteil,
- einem mit einem Verschlußelement (5) versehenen ersten Ende und
- einem zweiten Ende für den Angriff des ein Verschieben bewirkenden Betätigungsmittels (11).

6. Ringfilterelement nach einem der vorhergehenden Ansprüche,
**dadurch gekennzeichnet,**
**daß** das Verschlußelement ein radial dichtender Dichtring (5) ist.

7. Ringfilterelement nach einem der vorhergehenden Ansprüche,
**dadurch gekennzeichnet,**
**daß** der Dichtring (5) als eine in eine Richtung des Verschiebeweges wirksame Verschiebewegbegrenzung dient.

8. Filtergehäuse mit einem Filtergehäusetopf und einem axial abnehmbaren Deckel für ein Ringfilterelement nach einem der vorhergehenden Ansprüche,
**dadurch gekennzeichnet,**
**daß** in dem Filterdeckel (7) ein bei Schließen des Filterdekkels (1) ein Verschieben des Verschlußstopfens (3) bewirkendes Betätigungsmittel (11) vorgesehen ist.

9. Filtergehäuse nach Anspruch 8,
**dadurch gekennzeichnet,**
**daß** in dessen geschlossenem Zustand das in dem Filterdeckel (7) für ein Verschieben des Verschlußstopfens (3) vorgesehene Betätigungsmittel (11) den Verschlußstopfen (3) in Schließstellung arretiert hält, während diese Arretierung bei geöffnetem Filterdeckel (7) aufgehoben ist.

## Claims

1. A ring filter element with a stopper plug, in particular for a lubricating oil filter of a combustion engine, for insertion into a filter housing with a filter housing barrel and an axially removable filter cover, in which the stopper plug in the state inserted into the closed filter housing, closes off an aperture which exists in the filter housing barrel, said aperture being aligned along the same axis as the stopper plug,
**characterised by the features**
- the stopper plug (3) is held on the ring filter element (1) so as to be aligned along the same axis as said ring filter element (1) or parallel to said ring filter element (1), so as to be slidable;
- the holding arrangement makes it possible to slide the stopper plug (3) by means of an actuating means (11) which acts upon said stopper plug (3) by contact, from outside the ring filter element (1).

2. The ring filter element according to claim 1,
**characterised in that**
in the state in which it is not inserted into a filter housing, the stopper plug (3) can be completely slid into a space which is situated between the axial ends of the ring filter element (1).

3. The ring filter element according to claim 1 or 2,
**characterised in that**
the stopper plug (3) is held in the centre of the ring filter element (1).

4. The ring filter element according to one of the preceding claims,
**characterised in that**
the sliding path of the stopper plug (3) is delimited on both sides.

5. The ring filter element according to one of the preceding claims,
**characterised in that**
the stopper plug (3) is bolt shaped, comprising
- a centre part which is slidably held in a bearing. ring (2) of the ring filter element (1);
- a first end comprising a closure element (5); and
- a second end for engagement by a actuating means (11) which causes sliding.

6. The ring filter element according to one of the preceding claims,
**characterised in that**
the closure element is a sealing ring (5) which provides a radial seal.

7. The ring filter element according to one of the preceding claims,
**characterised in that**
the sealing ring (5) serves as a delimitation of the sliding path, which delimitation is effective in one direction of the sliding path.

8. The filter housing with a filter housing barrel and an axially removable cover for a ring filter element according to one of the preceding claims,
**characterised in that**
in the filter cover (7) an actuating means (11) is provided, which, during closing of the filter cover (1), causes the stopper plug (3) to slide.

9. The filter housing according to claim 8,
**characterised in that**
in its closed state the actuating means (11) provided in the filter cover (7) for sliding the stopper plug (3), keeps the stopper plug (3) locked in its closed position, while this locking action is cancelled when the filter cover (7) is open.

## Revendications

1. Elément filtrant annulaire avec un bouchon de fermeture, en particulier pour un filtre à huile d'un moteur à combustion interne, destiné à être inséré dans un boîtier de filtre avec un pot de boîtier de filtre et un couvercle de filtre pouvant être enlevé dans la direction axiale, dans lequel le bouchon de fermeture obture, lorsqu'il est inséré dans le boîtier de filtre fermé, un orifice existant dans le pot de boîtier de filtre et s'étendant dans le même axe que le bouchon de fermeture, **caractérisé par** les caractéristiques suivantes :
- le bouchon de fermeture (3) est monté sur l'élément filtrant annulaire (1) de manière mobile suivant le même axe ou parallèlement à l'axe,
- le montage permet un déplacement du bouchon de fermeture (3) par un moyen de commande (11) appliqué sur celui-ci en établissant un contact sur celui-ci à partir de l'extérieur de l'élément filtrant annulaire (1).

2. Elément filtrant annulaire selon la revendication 1, **caractérisé en ce que**, lorsqu'il n'est pas inséré dans le boîtier de filtre, le bouchon de fermeture (3) peut être déplacé entièrement dans un espace situé entre les extrémités axiales de l'élément filtrant annulaire (1).

3. Elément filtrant annulaire selon la revendication 1 ou 2, **caractérisé en ce que** le bouchon de fermeture (3) est situé au centre de l'élément filtrant annulaire (1).

4. Elément filtrant annulaire selon l'une quelconque des revendications précédentes, **caractérisé en ce que** la course de déplacement du bouchon de fermeture (3) est limitée des deux côtés.

5. Elément filtrant annulaire selon l'une quelconque des revendications précédentes, **caractérisé en ce que** le bouchon de fermeture (3) est conçu en forme de goujon avec
- une partie centrale montée de manière mobile dans un anneau d'appui (2) de l'élément filtrant annulaire (1),
- une première extrémité munie d'un élément d'obturation (5), et
- une deuxième extrémité pour l'attaque du moyen de commande (11) provoquant un déplacement.

6. Elément filtrant annulaire selon l'une quelconque des revendications précédentes, **caractérisé en ce que** l'élément d'obturation est une bague d'étanchéité (5) assurant une étanchéité radiale.

7. Elément filtrant annulaire selon l'une quelconque des revendications précédentes, **caractérisé en ce que** la bague d'étanchéité (5) sert de limitation de la course de déplacement agissant dans une direction de la course de déplacement.

8. Boîtier de filtre avec un pot de boîtier de filtre et un couvercle amovible dans la direction axiale pour un élément filtrant annulaire selon l'une quelconque des revendications précédentes, **caractérisé en ce qu'**il est prévu, dans le couvercle de filtre (7), un moyen de commande (11) provoquant un déplacement du bouchon de fermeture (3) lors de la fermeture du couvercle de filtre (7).

9. Boîtier de filtre selon la revendication 8, **caractérisé en ce que**, lorsque ce dernier est fermé, le moyen de commande (11) prévu dans le couvercle de filtre (7) pour le déplacement du bouchon de fermeture (3) maintient bloqué le bouchon de fermeture (3) en position fermée, tandis que ce blocage est supprimé lorsque le couvercle de filtre (7) est ouvert.
